# EUROPÄISCHE PATENTANMELDUNG

(11) **EP 3 965 090 A1**
(43) Veröffentlichungstag der Anmeldung: **09.03.2022**
(21) Anmeldenummer: 20020396.6
(22) Anmeldetag: 02.09.2020
(51) Int. Cl.: G09B 5/00, G07C 1/24

(54) **ZEITERFASSUNGSSYSTEM ZUR ZEITMESSUNG IM SPORT**

(71) Anmelder: Kretschmer, Daniel, 87435 Kempten (DE)
(72) Erfinder: Kretschmer, Daniel, 87435 Kempten (DE)
(74) Vertreter: Fritsche, Anja

(57) **Zusammenfassung**

Die vorliegende Anmeldung betrifft ein Zeiterfassungssystem zur Zeitmessung im Sport, insbesondere bei einer Sportveranstaltungen, bei einem Wettkampf oder im Training, insbesondere im Klettersport, das bereits in einer ersten Zeitphase, in der ein Sportausübender seine Startposition einnimmt, Informationen betreffend das Startverhalten des Sportausübenden bereitstellt.

## Beschreibung

Die vorliegende Anmeldung betrifft ein Zeiterfassungssystem zur Zeitmessung im Sport, insbesondere bei einer Sportveranstaltungen, bei einem Wettkampf oder im Training.

Bei vielen Sportarten spielt sowohl im Wettkampf als auch im Training die Zeitmessung eine zentrale Rolle. Oft entscheiden Hundertstel- und teilweise auch Tausendstelsekunden über Sieg und Niederlage. Eine präzise Zeitmessung ist daher im Wettkampfsport, aber auch zu Trainingszwecken, eine essentielle Grundlage. Schon seit längerer Zeit hat die klassische Handstoppuhr bei Sportveranstaltungen ausgedient, da die verzögerte Reaktionszeit aufgrund der menschlichen Wahrnehmung die Zeitmessung verfälscht. Daher hat im Sport die elektronische Zeitmessung die Zeitnahme per Handstoppung weitgehend abgelöst. Aufgrund der Vielfalt von Sportarten bei denen eine Zeitmessung erforderlich ist, gibt es verschiedene Möglichkeiten, um eine präzise Zeitmessung zu ermöglichen. Relevant ist dabei unter anderem, wie viele Sportler gleichzeitig starten und/oder parallel ins Ziel kommen.

Eine Möglichkeit zur Zeitmessung, die insbesondere im Klettersport beim Speedklettern Anwendung findet, basiert auf einem Zeitmesssystem, umfassend ein Startauslösereinrichtung (Startpad) und ein Zielauslösereinrichtung (Toppad). Damit ein solches System bei nationalen und internationalen Speedkletterwettkämpfen zum Einsatz kommen kann, muß es bestimmte an den Wettkampfablauf angepaßte Anforderungen erfüllen.

Diese Anforderungen ergeben sich aus dem nationalen bzw. internationalen Regelwerk für Kletterwettkämpfe. Zu Beginn jedes Race, bei dem jeweils zwei Sportausübende gegeneinander antreten, werden die Sportausübenden zum Start aufgerufen. Sie haben dann die Möglichkeit, das Startpad vor der Route in die von ihnen für den Start bevorzugte Position zu bringen. Danach nimmt jeder Sportausübende eine vom Starter/Schiedsrichter zugewiesene Vorbereitungsposition ein. Hier findet das Anbringen des Sicherungssystems und ein Sicherheitscheck statt. Nach dem Kommando "At your Marks" nimmt jeder Wettkämpfer unmittelbar seine Startposition mit beiden Händen und einem Fuß auf Startgriffen an der Wand und einem Fuß auf dem Startpad ein. Danach ruft der Starter/Schiedsrichter "Ready" und löst das Zeitmesssystem aus. Eine Sekunde nach Auslösen des Zeitmesssystems ertönt ein erster tiefer Piepton (Dauer: 0,2 Sekunden), zwei Sekunden nach Auslösen des Zeitmesssystems dann ein zweiter tiefer Piepton (Dauer: 0,2 Sekunden) und drei Sekunden nach Auslösen des Zeitmesssystems der hohe Start-Piepton (Dauer: 0,1 Sekunde) mit dem die Zeitmessung gestartet wird. Verläßt der Sportausübende das Startpad vor dem Start-Piepton oder hat er eine Reaktionszeit unter 0,100 Sekunden, so führt dies zu einem Fehlstart und damit zum Ausscheiden aus dem Wettkampf. Eine gültige Zeit erhält jeder Sportausübende, der das Toppad berührt und die Zeitmessung gestoppt hat. Keine gültige Zeit bekommen die Sportausübenden, die das Toppad zwar berühren, bei denen die Zeitmessung jedoch nicht gestoppt hat (siehe z.B. "Klettern Nationales Regelwerk des DAV", Version 19.1, Johannes Altner - Mai 2019; Abschnitt "Kletterablauf' 9.11).

Grundsätzlich sind die Startauslösereinrichtungen so eingerichtet, dass eindeutig zwischen dem Status "Startbetätigung" und dem Status "nicht Startbetätigung" unterschieden werden kann. Während einer ersten Zeitphase, die mit dem Kommando "At your Marks" beginnt, nimmt der Sportausübende seine Startposition auf der Startauslösereinrichtungen ein. In dieser Zeitphase sind die Auslösesensoren der Startauslösereinrichtung noch nicht "scharfgestellt". Während einer zweiten Zeitphase, die mit dem Auslösen des Zeitmesssystem durch den Schiedsrichter beginnt und mit dem Ende des Startpieptons endet, sind die Auslösesensoren der Startauslösereinrichtung "scharfgestellt". In dieser Zeitphase führt die Erfassung einer Startbetätigung des Sportausübenden zu einem Fehlstart. Nur während einer dritten Zeitphase, die 0,100 Sekunden nach dem Start-Piepton beginnt, wird eine von der Startauslösereinrichtung gemessene Startbetätigung als zulässiger Start gewertet.

Verschiedene Zeitmesssysteme finden bereits fürs Speedklettern Anwendung. Diese Systeme weisen jedoch verschiedene Nachteile auf, insbesondere bei der Verwendung im Wettkampfsport.

Ein in der Praxis für den Sportausübenden häufig auftretendes Problem der bislang bekannten Zeitmesssysteme besteht darin, dass innerhalb der zweiten Zeitphase, in der die Auslösesensoren "scharfgestellt" sind, ein Fehlstart ausgelöst wurde, ohne dass der Sportausübende wußte warum. Dies führte jeweils zum Ausscheiden des Sportausübenden aus dem Wettkampf. Nähere Untersuchungen des Erfinders bestätigten die Vermutung, dass manche der von den Sportausübenden individuell eingenommenen Startpositionen an der Startauslösereinrichtung aufgrund der Konstruktionseigenheiten der bestehenden Zeitmesssysteme irrtümlicherweise als Startbetätigungen erfasst wurden.

Ein weiteres für den Sportausübenden häufig auftretendes Problem der bislang bekannten Zeitmesssysteme besteht darin, dass der Sportausübende keine gültige Zeit erhielt, obwohl er die Zielauslösereinrichtung berührt hat. In diesen Fällen wurde die Zeitmessung aufgrund der Konstruktionseigenheiten der bestehenden Zeitmesssysteme nicht gestoppt.

Es ist daher eine Aufgabe der vorliegenden Erfindung ein Zeiterfassungssystem zur Zeitmessung im Sport, insbesondere bei einer Sportveranstaltung, bei einem Wettkampf oder im Training, bereitzustellen, mittels dem die oben beschriebenen Nachteile zumindest teilweise überwunden werden können.

Diese Aufgabe wird erfindungsgemäß gelöst durch ein in den Ansprüchen definiertes Zeiterfassungssystem.

Die vorliegende Erfindung betrifft demnach ein Zeiterfassungssystem zur Durchführung einer Zeitmessung im Sport, bei der der Sportausübende während einer ersten Zeitphase seine Startposition einnimmt, der Start während einer zweiten Zeitphase unzulässig ist und während einer dritten Zeitphase zulässig ist, wobei die zweite Zeitphase unmittelbar auf die erste Zeitphase folgt und die dritte Zeitphase unmittelbar auf die zweite Zeitphase folgt, aufweisend
eine Startauslösereinrichtung, die vom Sportausübenden mittels einer Startbetätigung auslösbar ist, um ein Startbetätigungssignal auszugeben, wobei die Startauslösereinrichtung so eingerichtet ist, dass zwischen dem Status "Startbetätigung" und dem Status "nicht Startbetätigung" unterschieden werden kann,
eine Zielauslösereinrichtung, die vom Sportausübenden mittels einer Zielbetätigung auslösbar ist, um ein Zielbetätigungssignal auszugeben,
eine elektronische Signalverarbeitungseinrichtung, die mit der Startauslösereinrichtung verbunden ist, um das Startbetätigungssignal elektronisch zu erfassen, und die mit der Zielauslösereinrichtung verbunden ist, um das Zielbetätigungssignal elektronisch zu erfassen,
dadurch gekennzeichnet, dass
das Zeiterfassungssystem dazu eingerichtet ist, während der ersten Zeitphase den Status der Startauslösereinrichtung zu messen.

Durch das erfindungsgemäße Zeiterfassungssystem wird erstmals ein System zur Durchführung einer Zeitmessung im Sport bereitgestellt, das bereits in einer ersten Zeitphase, in der der Sportausübende seine Startposition einnimmt, in welcher die Auslösesensoren vorzugsweise bereits Messungen durchführen, die jedoch nicht zur Registrierung einer Startbetätigung führen können, also in welcher die Auslösesensoren noch nicht "scharfgestellt" sind, Informationen über den Status der Startauslösereinrichtung erfasst, wobei diese Informationen insbesondere dem Sportausübenden bereitgestellt werden können und/oder zur Auswertung erfasst und gespeichert werden können. Mit Hilfe dieser Informationen kann erreicht werden, dass der Sportausübende also bereits innerhalb einer ersten Zeitphase, in der er seine individuelle Startposition auf der Startauslösereinrichtung einnimmt, erfährt, ob die von ihm eingenommene Startposition in der zweiten Zeitphase, in der die Sensoren "scharfgestellt" sind, zu einer Startbetätigung oder einer nicht Startbetätigung (also keiner Startbetätigung) führen würde. Somit ist es dem Sportausübenden bereits in einer ersten Zeitphase mit Einnehmen der Startposition möglich, die eingenommene Startposition dahingehend zu überprüfen, ob diese in einer zweiten Zeitphase möglicherweise zu einem unbeabsichtigten Fehlstart führen würde. Hat der Sportausübende also eine ungünstige Startposition innerhalb der ersten Zeitphase eingenommen, welche in der zweiten Zeitphase zu einer Startbetätigung und damit zu einem Fehlstart führen würde, kann er diese korrigieren und eine Startposition einnehmen, welche bei Beibehaltung in der zweiten Zeitphase zu einer nicht Startbetätigung führen würde. Die bei den bislang bekannten Zeitmesssystemen auftretende Problematik, dass bestimmte von den Sportausübenden individuell eingenommene Startpositionen konstruktionsbedingt irrtümlicherweise als Startbetätigungen erfaßt wurden, wird bei dem erfindungsgemäßen Zeiterfassungssystem demzufolge vermieden. Selbst wenn also das Sensorsystem einer Startauslösereinrichtung fehlerhaft oder in unerwarteter Weise operieren sollte, hat der Sportausübende durch das erfindungsgemäße Zeiterfassungssystem in der ersten Zeitphase die Chance, durch Variation seiner Startposition eine zulässige Startposition zu finden, welche in der zweiten Zeitphase nicht zu einer unbeabsichtigten Startbetätigung führt. Fehlstarts infolge ungeeigneter Startpositionen können mit Hilfe des erfindungsgemäßen Zeiterfassungssystems somit vermieden werden.

Das erfindungsgemäße Zeiterfassungssystem ist insbesondere für eine Durchführung einer Zeitmessung im Sport, insbesondere bei einer Sportveranstaltung, bei einem Wettkampf oder im Training, geeignet, wobei der Begriff "Sport" sowohl Breitensport als auch Leistungssport, insbesondere Breitensport und Leistungssport im Klettersportbereich, vorzugsweise im Speedklettersport, umfasst. Der Begriff "Sportausübender" umfasst in Zusammenhang mit dem erfindungsgemäßen Zeiterfassungssystem sowohl Breitensportler/Breitensportlerinnen, Leistungssportler/Leistungssportlerinnen als auch Profisportler/Profisportlerinnen, vorzugsweise im Bereich des Klettersports, insbesondere im Speedklettersport.

Die Durchführung der Zeitmessung ist bei dem erfindungsgemäßen Zeiterfassungssystem in Bezug auf den Startvorgang in drei Zeitphasen gegliedert. In einer ersten Zeitphase nimmt der Sportausübende seine Startposition auf der Startauslösereinrichtung ein. In dieser Zeitphase sind die Auslösesensoren der Startauslösereinrichtung noch nicht "scharfgestellt". Bei Anwendung im Klettersport, insbesondere Speedklettersport, ist es bevorzugt, dass diese erste Zeitphase vorzugsweise durch den Starter/Schiedsrichter durch das Kommando "At your Marks" eingeleitet wird. Daraufhin nimmt der Sportausübende seine Startposition mit beiden Händen und einem Fuß auf Startgriffen an der Wand und einem Fuß auf der Startauslösereinrichtung ein.

Die zweite Zeitphase beginnt mit dem Auslösen/Starten des Zeiterfassungssystems und endet mit dem Startsignal, mit dem vorzugsweise die Zeitmessung gestartet wird. Insbesondere endet die zweite Zeitphase 0,01 bis 0,2 Sekunden nach dem Auslösen des Startsignals, vorzugsweise 0,05 bis 0,15 Sekunden, mehr bevorzugt 0,075 bis 0,125 Sekunden und besonders bevorzugt 0,100 Sekunden nach dem Auslösen des Startsignals und dem Beginn der Zeitmessung. In dieser zweiten Zeitphase sind die Auslösesensoren der Startauslösereinrichtung bereits "scharfgestellt". Die Erfassung einer Startbetätigung des Sportausübenden in dieser Zeitphase führt zu einem Fehlstart des Starters. Es ist bevorzugt, dass bei Anwendung im Klettersport, insbesondere Speedklettersport, diese zweite Zeitphase vorzugsweise durch den Starter/Schiedsrichter durch das Kommando "Ready" und das Auslösen/Starten des Zeiterfassungssystems eingeleitet wird. Gemäß dem nationalen und internationalen Regelwerk für das Speedklettern ertönt vorzugsweise in der zweiten Zeitphase eine Sekunde nach Auslösen des Zeiterfassungssystems ein erster tiefer Piepton (Dauer: 0,2 Sekunden), zwei Sekunden nach Auslösen des Zeiterfassungssystems ein zweiter tiefer Piepton (Dauer: 0,2 Sekunden) und drei Sekunden nach Auslösen des Zeiterfassungssystems ein hoher Start-Piepton (Dauer: 0,1 Sekunden) mit dem die Zeitmessung gestartet wird. Vorzugsweise endet die zweite Zeitphase 0,100 Sekunden nach dem Startsignal. Verläßt der Sportausübende die Startauslösereinrichtung vor dem Start-Piepton oder hat er eine Reaktionszeit unter 0,100 Sekunden, so führt die Erfassung einer Startbetätigung zu einem Fehlstart.

Die dritte Zeitphase folgt unmittelbar auf die zweite Zeitphase, die mit dem Startsignal, vorzugsweise 0,010 bis 0,200 Sekunden, bevorzugt 0,050 bis 0,150 Sekunden, mehr bevorzugt 0,075 bis 0,125 Sekunden und insbesondere 0,100 Sekunden nach dem Startsignal endet. Nur während dieser dritten Zeitphase wird eine von der Startauslösereinrichtung gemessene Startbetätigung des Sportausübenden als zulässiger Start gewertet. Bei Anwendung im Klettersport, vorzugsweise beim Speedklettern ist es bevorzugt, dass die dritte Zeitphase 0,100 Sekunden nach dem Startsignal und dem Beginn der Zeitmessung startet.

Wie hierin verwendet, bezeichnet der Begriff "nicht Startbetätigung" den Status bzw. Messzustand, in dem von der Startauslösereinrichtung keine Startbetätigung gemessen oder erfasst wird, also insbesondere der Sportausübende an der Startauslösereinrichtung keine Startbetätigung auslöst. Insbesondere bezeichnet der Begriff "nicht Startbetätigung", dass von der Startauslösereinrichtung, insbesondere von wenigstens einem Auslösesensor oder einer Sensoreinrichtung der Startauslösereinrichtung kein Signal gemessen wird, das als Startbetätigung gemessen wird.

Wie hierin verwendet, bezeichnet der Begriff "Startbetätigung" den Status bzw. Messzustand, in dem von der Startauslösereinrichtung eine Startbetätigung gemessen oder erfasst wird, also insbesondere der Sportausübende an der Startauslösereinrichtung eine Startbetätigung auslöst. Insbesondere bezeichnet der Begriff "Startbetätigung", dass von der Startauslösereinrichtung, insbesondere von wenigstens einem Auslösesensor oder einer Sensoreinrichtung der Startauslösereinrichtung ein Signal gemessen wird, das als Startbetätigung gemessen wird.

Beispielsweise kann im Falle mindestens eines Kraftsensors überprüft werden, ob die gemessene Kraft sich oberhalb eines bestimmten Schwellenwerts befindet, was als "nicht Startbetätigung" gewertet werden kann, oder diesen Schwellenwert unterschreitet, was als "Startbetätigung" gewertet werden kann. Oder es kann im Falle mindestens eines Bewegungssensors überprüft werden, ob die gemessene Bewegung sich unterhalb eines bestimmten Schwellenwerts befindet, was als "nicht Startbetätigung" gewertet werden kann, oder diesen Schwellenwert überschreitet, was als "Startbetätigung" gewertet werden kann. Bei der Messung können mehrere Messwerte statistisch ausgewertet werden, insbesondere ein Mittelwert erfasst werden, um die Zuverlässigkeit der Entscheidung "Startbetätigung" versus "nicht Startbetätigung" zu erhöhen. Weiterhin kann im Falle mindestens eines Schalters, beispielsweise eines Mikroschalters überprüft werden, ob der Schalter betätigt oder umgelegt ist, was als "nicht Startbetätigung" gewertet werden kann, oder nicht betätigt bzw. nicht umgelegt ist, was als "Startbetätigung" gewertet werden kann.

Insbesondere wird demnach mittels der Startauslösereinrichtung der Messzustand "Startbetätigung" bzw. "nicht Startbetätigung" gemessen, insbesondere mittels einer vom Sportausübenden an der Startauslösereinrichtung, vorzugsweise an den Auslösesensoren bzw. der Sensoreinrichtung der Startauslösereinrichtung, ausgeübten und erfassten Kraft oder einer vom Sportausübenden an der Startauslösereinrichtung, vorzugsweise an den Auslösesensoren bzw. der Sensoreinrichtung der Startauslösereinrichtung, ausgeübten und erfassten Bewegung bzw. "Nicht-Bewegung", wobei es in der Praxis auf die Höhe der Kraft oder die Ausprägung der Bewegung ankommt. Bei Anwendung im Klettersport, vorzugsweise beim Speedklettern, liegt der Messzustand "nicht Startbestätigung" (oder "keine Startbetätigung") vorzugsweise dann vor, wenn der Sportausübende seine Startposition mit einem Fuß auf der Startauslösereinrichtung einnimmt und diesen im Rahmen einer Toleranz unbewegt hält, wobei beim Ändern dieser Position durch Stoßbelastung und/oder Entlastung eine erfassbare Kraft auf die Startauslösereinrichtung, vorzugsweise die Auslösesensoren bzw. die Sensoreinrichtung der Startauslösereinrichtung, ausgeübt wird und eine Startbetätigung gemessen wird, so dass der Messzustand "Startbetätigung" gemessen wird. Bei Anwendung im Klettersport, vorzugsweise beim Speedklettern, liegt der Messzustand "Startbestätigung" vorzugsweise dann vor, wenn der Sportausübende zumindest teilweise seinen Fuß von der Startauslösereinrichtung nimmt und/oder diese verlässt, wodurch sich die auf die Startauslösereinrichtung, vorzugsweise die Auslösesensoren bzw. die Sensoreinrichtung der Startauslösereinrichtung, vom Sportausübenden ausgeübte und erfasste Kraft ändert bzw. verringert, wobei es in der Praxis auf die Höhe der Kraftänderung bzw. die Ausprägung der Bewegung ankommt.

Das erfindungsgemäße Zeiterfassungssystem weist eine Startauslösereinrichtung auf, die vom Sportausübenden mittels einer Startbetätigung auslösbar ist, um ein - insbesondere elektrisches - Startbetätigungssignal auszugeben, wobei die Startauslösereinrichtung so eingerichtet ist, dass zwischen dem Status "Startbetätigung" und dem Status "nicht Startbetätigung" unterschieden werden kann. Der Begriff "eine Startauslösereinrichtung" umfasst erfindungsgemäß wenigstens eine Startauslösereinrichtung, vorzugsweise eine, zwei oder mehr, besonders bevorzugt zwei Startauslösereinrichtungen. Vorzugsweise ist das Zeiterfassungssystem dazu eingerichtet, die Zeiten von mehr als einem Sportausübenden, insbesondere von zwei, drei, vier oder fünf oder bis zu zehn Sportausübenden, vorzugsweise einer Vielzahl von Sportausübenden gleichzeitig zu erfassen. Dadurch ist es dem erfindungsgemäßen Zeiterfassungssystem möglich eine, zwei oder mehr parallel laufende Zeitmessungen im Sport durchzuführen, was insbesondere bei Wettkämpfen erforderlich ist. Vorzugsweise ist die Startauslösereinrichtung eine mit dem Fuß betätigbare Startauslösereinrichtung, besonders bevorzugt in der Form eines Startpads.

Ferner weist das erfindungsgemäße Zeiterfassungssystem eine Zielauslösereinrichtung auf, die vom Sportausübenden mittels einer Zielbetätigung auslösbar ist, um ein Zielbetätigungssignal auszugeben. Der Begriff "Zielbetätigung" umfasst dabei das Betätigen der Zielauslösereinrichtung, vorzugsweise durch Berühren der Zielauslösereinrichtung mit der Hand, so dass ein Zielbetätigungssignal ausgegeben wird, welches die Zeitmessung stoppt. Insbesondere bezeichnet der Begriff eine vom Sportausübenden an der Zielauslösereinrichtung, vorzugsweise an den Auslösesensoren der Zielauslösereinrichtung, ausgeübte und erfasste Kraft oder Berührung, wobei es in der Praxis auf die Höhe der Kraft oder die Ausprägung der Berührung ankommt. Der Begriff "eine Zielauslösereinrichtung" umfasst erfindungsgemäß wenigstens eine Zielauslösereinrichtung, vorzugsweise eine, zwei oder mehr, besonders bevorzugt zwei Zielauslösereinrichtungen. Dadurch ist es dem erfindungsgemäßen Zeiterfassungssystem möglich eine, zwei oder mehr parallel laufende Zeitmessungen im Sport durchzuführen, was insbesondere bei Wettkämpfen erforderlich ist. Vorzugsweise ist die Zielauslösereinrichtung eine mit der Hand betätigbare Zielauslösereinrichtung, besonders bevorzugt in der Form eines Toppads.

Zudem weist das erfindungsgemäße Zeiterfassungssystem eine elektronische Signalverarbeitungseinrichtung auf, die mit der Startauslösereinrichtung verbunden ist, um das Startbetätigungssignal elektronisch zu erfassen, und die mit der Zielauslösereinrichtung verbunden ist, um das Zielbetätigungssignal elektronisch zu erfassen. Insbesondere ist die elektronische Signalverarbeitungseinrichtung dazu eingerichtet bzw. programmiert, um unter Verwendung zumindest des Startbetätigungssignals und/oder des Zielbetätigungssignals eine Zeitdifferenz zu messen, vorzugsweise um zu ermitteln, ob eine Startbetätigung in der zweiten Zeitphase liegt - was als Fehlstart zu werten wäre. Vorzugsweise beinhaltet die elektronische Signalverarbeitungseinrichtung eine elektronische Platine, und insbesondere mindestens einen integrierten Schaltkreis (IC), und/oder vorzugsweise einen Mikroprozessor, und/oder vorzugsweise einen Mikrocontroller, vorzugsweise mindestens eine Schnittstelle, um mindestens ein Startbetätigungssignal von mindestens einer Startauslösereinrichtung zu erfassen und/oder mindestens eine Schnittstelle, um mindestens ein Zielbetätigungssignal von mindestens einer Zielauslösereinrichtung zu erfassen, vorzugsweise mindestens eine Schnittstelle um Daten mit einer weiteren Datenverarbeitungseinrichtung des Zeiterfassungssystems bzw. mit einem Datenverarbeitungsprogramm, insbesondere einem Betriebssystem, des Zeiterfassungssystems auszutauschen, einen Zeitgeber als Grundlage für eine Zeitmessung, insbesondere eine Messung bis in den Mikrosekundenbereich, und/oder ein Datenverarbeitungsprogramm, das eingerichtet bzw. programmiert ist, um unter Verwendung zumindest des Startbetätigungssignals und/oder des Zielbetätigungssignals eine Zeitdifferenz zu messen, vorzugsweise auch um zu ermitteln, ob das Startbetätigungssignal in der zweiten Zeitphase liegt - was als Fehlstart zu werten wäre.

In einer bevorzugten Ausführungsform des erfindungsgemäßen Zeiterfassungssystems ist insbesondere die Signalverarbeitungseinrichtung des Zeiterfassungssystems dazu eingerichtet, während der ersten Zeitphase den Status der Startauslösereinrichtung, d.h. den Status "Startbetätigung" und/oder "nicht Startbetätigung" zu messen.

In einer weiteren bevorzugten Ausführungsform des erfindungsgemäßen Zeiterfassungssystems ist das Zeiterfassungssystem ferner dazu eingerichtet, während jeder der ersten, zweiten und/oder dritten Zeitphase den Status der Startauslösereinrichtung, d.h. den Status "Startbetätigung" und/oder "nicht Startbetätigung" zu messen. Zudem ist es bevorzugt, dass insbesondere die Signalverarbeitungseinrichtung dazu eingerichtet ist, während jeder der ersten, zweiten und/oder dritten Zeitphase den Status der Startauslösereinrichtung zu messen.

Vorzugsweise erfolgt die während der ersten Zeitphase, insbesondere zusätzlich auch während der zweiten und/oder dritten Zeitphase, erfolgende Messung des Status der Startauslösereinrichtung mittels mindestens eines Sensors einer Sensoreinrichtung der Startauslösereinrichtung oder mittels mindestens eines Sensors einer Sensoreinrichtung des Zeiterfassungssystems. Insbesondere weist die Sensoreinrichtung mindestens zwei Sensoren, vorzugsweise mindestens 3 Sensoren und besonders bevorzugt 4 Sensoren auf. Der mindestens eine Sensor ist insbesondere dazu eingerichtet eine Startbetätigung oder nicht Startbetätigung an der Startauslösereinrichtung zu messen. Vorzugsweise umfasst der mindestens eine Sensor einen Drucksensor, einen Kraftsensor, einen Kraftmesssensor, einen Bewegungssensor, einen Schalter, einen optischen Sensor und/oder einen kapazitiver Sensor. Insbesondere ist der wenigstens eine Sensor ein Schalter, der im Status "nicht Startbetätigung" umgelegt ist. Vorzugsweise ist der Schalter gefedert gelagert. Besonders bevorzugt ist der Schalter ein Mikroschalter. Insbesondere ist der Schalter ein Sprungschalter und/oder ein Schnappschalter. Der Schalter kann auch eine optische Messung verwenden, insbesondere eine Lichtschranke, deren Unterbrechung mittels Photosensor erfasst wird oder eine andere optische Anordnung, deren Veränderung als Startbetätigung gemessen wird. Vorzugsweise ist der mindestens eine Sensor ein Mikroschalter, insbesondere ein Mikroschalter der Firma TRUComponents, Artikelnummer 1564809 oder der Firma MISUMI, Artikel MSNWF-S.

Insbesondere ist die Signalverarbeitungseinrichtung des erfindungsgemäßen Zeiterfassungssystems dazu eingerichtet, den Status "Startbetätigung" zu ermitteln, wenn keiner der Sensoren aktiviert ist - also insbesondere keiner der Mikroschalter gedrückt ist - und/oder den Satus "nicht Startbetätigung" zu ermitteln, wenn mindestens einer der Sensoren aktiviert ist - also insbesondere mindestens einer der Mikroschalter gedrückt ist.

In einer weiteren bevorzugten Ausführungsform weist das erfindungsgemäße Zeiterfassungssystem ferner eine Ausgabeeinrichtung auf und ist dazu eingerichtet, in Abhängigkeit von der während der ersten Zeitphase, insbesondere zusätzlich auch während der zweiten und/oder dritten Zeitphase, erfolgenden Messung des Status der Startauslösereinrichtung mittels der Ausgabeeinrichtung ein von dem Sportausübenden wahrnehmbares Hinweissignal auszugeben. Der Begriff "eine Ausgabeeinrichtung" umfasst erfindungsgemäß mindestens eine Ausgabeeinrichtung, insbesondere eine, zwei, drei, vier oder mehr Ausgabeeinrichtungen. Vorzugsweise ist die Ausgabeeinrichtung ein Bestandteil der Startauslösereinrichtung.

Im Hinblick auf die Ausgabeeinrichtung ist es gemäß dem erfindungsgemäßen Zeiterfassungssystem bevorzugt, dass die Ausgabeeinrichtung mindestens eine Lichtquelle, insbesondere mindestens 2, 3, 4 oder 5 Lichtquellen umfasst. Vorteilhafterweise handelt es sich bei der Lichtquelle um eine Leuchtdiode, insbesondere einen RGB LED-Lichtstreifen.

In einer bevorzugten Ausführungsform des erfindungsgemäßen Zeiterfassungssystems ist die Ausgabeeinrichtung dazu eingerichtet,
a) ein erstes Hinweissignal auszugeben, wenn während der ersten Zeitphase der Status "Startbetätigung" gemessen wird, vorzugsweise also insbesondere wenn eine durch eine unzulässige Startpositionierung des Sportausübenden bewirkte Startbetätigung gemessen wird, und/oder
b) ein zweites Hinweissignal auszugeben, wenn während der ersten Zeitphase der Status "nicht Startbetätigung" gemessen wird, vorzugsweise also insbesondere wenn keine durch eine unzulässige Startpositionierung des Sportausübenden bewirkte Startbetätigung gemessen wird, und/oder
c) ein drittes Hinweissignal auszugeben, wenn während der zweiten Zeitphase der Status "nicht Startbetätigung" gemessen wird, vorzugsweise also insbesondere wenn keine durch eine unzulässige Startpositionierung des Sportausübenden bewirkte Startbetätigung oder keine durch einen verfrühten Start des Sportausübenden innerhalb der zweiten Zeitphase bewirkte Startbetätigung gemessen wird, und/oder
d) ein viertes Hinweissignal auszugeben, welches insbesondere einen Fehlstart signalisiert, wenn während der zweiten Zeitphase der Status "Startbetätigung" gemessen wird, vorzugsweise also insbesondere wenn eine durch eine unzulässige Startpositionierung des Sportausübenden bewirkte Startbetätigung oder eine durch einen verfrühten Start des Sportausübenden innerhalb der zweiten Zeitphase bewirkte Startbetätigung gemessen wird, und/oder
e) ein fünftes Hinweissignal auszugeben, welches insbesondere den Beginn der Zeitmessung signalisiert, und/oder
f) ein sechstes Hinweissignal auszugeben, welches insbesondere einen zulässigen Start signalisiert, wenn während der dritten Zeitphase der Status "Startbetätigung" gemessen wird, vorzugsweise also insbesondere wenn während der dritten Zeitphase eine durch den Sportausübenden bewirkte Startbetätigung gemessen wird,
wobei sich die Hinweissignale für den Sportausübenden vorzugsweise jeweils wahrnehmbar unterscheiden.

Vorteilshafterweise unterscheiden sich die Hinweissignale a) und b), c) und d) als auch e) und f) für den Sportausübenden vorzugsweise jeweils wahrnehmbar voneinander. Idealerweise unterscheiden sich die Hinweissignale a), b), c), d), e) und f) für den Sportausübenden jeweils wahrnehmbar voneinander. Die von der Ausgabeeinrichtung des erfindungsgemäßen Zeiterfassungssystems ausgegebenen Hinweissignale können akustische und/oder visuelle Hinweissignale sein. Vorzugsweise sind die akustischen Hinweissignale Töne unterschiedlicher Frequenz und gegebenenfalls unterschiedlicher Lautstärke. Die visuellen Hinweissignale sind vorzugsweise Lichtsignale, besonders bevorzugt konstante Lichtsignale und/oder Blinklichtsignale, wobei sich die Lichtsignale vorzugsweise in der Farbe des Lichtes unterscheiden. Im Falle einer mindestens einen Lichtquelle aufweisenden Ausgabeeinrichtung unterscheiden sich die Hinweissignale vorzugsweise jeweils durch die Farbe des Lichtes und/oder die Art des Lichtes, d.h. konstantes Licht und/oder Blinklicht.

Bei Anwendung im Klettersport, vorzugsweise beim Speedklettern, ist das erste Hinweissignal a) vorzugsweise ein rotes Lichtsignal, insbesondere ein rotes konstantes Lichtsignal. An diesem ersten Hinweissignal erkennt der Sportausübende bereits in der ersten Zeitphase, dass keine zulässige Startposition eingenommen ist und keiner der Sensoren aktiviert ist. Das zweite Hinweissignal b) ist vorzugsweise ein oranges Lichtsignal, insbesondere ein oranges konstantes Lichtsignal, an dem der Sportausübende in der ersten Zeitphase erkennt, dass er eine zulässige Startposition eingenommen hat, welche bei Beibehaltung in der zweiten Zeitphase zu keiner konstruktionsbedingten, unbeabsichtigten Startbetätigung führt. Das dritte Hinweissignal c) ist vorzugsweise ebenso wie das zweite Hinweissignal b) ein oranges Lichtsignal, insbesondere ein oranges konstantes Lichtsignal, an dem der Sportausübende in der zweiten Zeitphase erkennt, dass er eine zulässige Startposition eingenommen hat. Das vierte Hinweissignal d) ist vorzugsweise ein rotes Lichtsignal, insbesondere ein rotes Blinklichtsignal, welches innerhalb der zweiten Zeitphase einen Fehlstart signalisiert. Das fünfte Hinweissignal e) ist vorzugsweise ein grünes Lichtsignal, insbesondere ein grünes Blinksignal und/oder ein grünes konstantes Lichtsignal. Vorteilhafterweise setzt sich das fünfte Hinweissignal e) aus einem grünen blinkenden Lichtsignal und einem grünen konstanten Lichtsignal zusammen, wobei vorzugsweise mit Beginn der Zeitmessung drei aufeinanderfolgende grüne blinkende Lichtsignale ausgegeben werden und mit Beginn der dritten Zeitphase ein grünes konstantes Lichtsignal ausgegeben wird (also insbesondere 0,100 Sekunden nach dem Startsignal). Das sechste Hinweissignal f) ist vorzugsweise ein grünes konstantes Lichtsignal. Prinzipiell ist aber jede andere Lichtfarbe, Lichtfarbkombination und Art des verwendeten Lichtes für die Hinweissignale a) bis f) möglich.

In einer bevorzugten Ausführungsform des erfindungsgemäßen Zeiterfassungssystems erfolgt die an der Zielauslösereinrichtung erfolgende Messung der Zielbetätigung des Sportausübenden mittels mindestens eines Sensors einer Sensoreinrichtung der Zielauslösereinrichtung. Der mindestens eine Sensor ist vorzugsweise dazu eingerichtet, eine vom Sportausübenden an der Zielauslösereinrichtung ausgeübte Kraft und/oder Berührung zu erfassen, so dass ein Zielbetätigungssignal ausgegeben wird, welches die Zeitmessung stoppt. Vorzugsweise ist der mindestens eine Sensor ein Drucksensor, ein Kraftsensor, ein Kraftmesssensor, ein Bewegungssensor, ein Schalter, ein optischer Sensor und/oder ein kapazitiver Sensor. Vorzugsweise wird genau ein Sensor verwendet, es ist aber auch möglich und bevorzugt, dass mehrere Sensoren verwendet werden, insbesondere verschiedene Arten von Sensoren. Besonders bevorzugt ist der mindestens eine Sensor ein kapazitiver Sensor. Die Verwendung eines kapazitiven Sensors hat den Vorteil, dass die Zielauslösereinrichtung des erfindungsgemäßen Zeiterfassungssystems selbst geringste Zielbetätigungen messen und verlässlich ein Zielbetätigungssignal auszugeben kann. Ferner muss die Zielauslösereinrichtung des erfindungsgemäßen Zeiterfassungssystems nicht mehr zentral bzw. mittig durch den Sportausübenden berührt werden, um verlässlich ein Zielbetätigungssignal auszugeben, wie es bei den bislang bekannten Zeitmesssystem der Fall war. Jegliche Zielbetätigung auf der Oberfläche der Zielauslösereinrichtung - egal ob mittig oder im Randbereich - führt zuverlässig zur Ausgabe eines Zielbetätigungssignals. Somit kann mit dem oben beschriebenen Zeiterfassungssystem sichergestellt werden, dass die Sportausübenden durch Berührung der Zielauslösereinrichtung eine gültige Zeit erhalten. Ein vorzeitiges Ausscheiden von Sportausübenden trotz Zielbetätigung, wie es bei den bislang bekannten Zeitmesssystemen teilweise der Fall war, kann somit verlässlich vermieden werden.

In einer weiteren bevorzugten Ausführungsform der vorliegenden Erfindung weist das Zeiterfassungssystem eine weitere Ausgabeeinrichtung auf und ist dazu eingerichtet, an der Zielauslösereinrichtung in Abhängigkeit von einer Messung einer Zielbetätigung des Sportausübenden mittels der weiteren Ausgabeeinrichtung ein vom Sportausübenden wahrnehmbares Hinweissignal auszugeben. Der Begriff "eine weitere Ausgabeeinrichtung" umfasst erfindungsgemäß wenigstens eine weitere Ausgabeeinrichtung, insbesondere eine, zwei, drei, vier oder mehr weitere Ausgabeeinrichtungen. Vorzugsweise ist die weitere Ausgabeeinrichtung ein Bestandteil der Zielauslösereinrichtung.

Im Hinblick auf die weitere Ausgabeeinrichtung ist es gemäß dem erfindungsgemäßen Zeiterfassungssystem bevorzugt, dass die weitere Ausgabeeinrichtung mindestens eine Lichtquelle, insbesondere mindestens 2, 3, 4 oder 5 Lichtquellen umfasst. Vorteilhafterweise handelt es sich bei der Lichtquelle um eine Leuchtdiode, insbesondere einen RGB LED-Lichtstreifen.

In einer bevorzugten Ausführungsform des erfindungsgemäßen Zeiterfassungssystems ist die weitere Ausgabeeinrichtung dazu eingerichtet,
a) ein erstes Hinweissignal auszugeben, wenn eine durch den Sportausübenden bewirkte Zielbetätigung gemessen wird, und/oder
b) ein zweites Hinweissignal auszugeben, welches einen Fehlstart signalisiert, wenn während der zweiten Zeitphase der Status "Startbetätigung" gemessen wird,
wobei sich die Hinweissignale für den Sportausübenden vorzugsweise jeweils wahrnehmbar unterscheiden.

Die von der weiteren Ausgabeeinrichtung des erfindungsgemäßen Zeiterfassungssystems ausgegebenen Hinweissignale können akustische und/oder visuelle Hinweissignale sein. Vorzugsweise sind die akustischen Hinweissignale Töne unterschiedlicher Frequenz und gegebenenfalls unterschiedlicher Lautstärke. Die visuellen Hinweissignale sind vorzugsweise Lichtsignale, insbesondere konstante Lichtsignale und/oder Blinklichtsignale, wobei sich die Lichtsignale vorzugsweise in der Farbe des Lichtes unterscheiden. Im Falle einer mindestens einen Lichtquelle aufweisenden Ausgabeeinrichtung unterscheiden sich die Hinweissignale vorzugsweise jeweils durch die Farbe des Lichtes, wobei ein Hinweissignal mehrere Farben aufweisen kann, und/oder die Art des Lichtes, d.h. konstantes Licht und/oder Blinklicht.

Bei Anwendung im Klettersport, vorzugsweise beim Speedklettern, ist das erste Hinweissignal a) vorzugsweise ein rotes oder grünes Lichtsignal, insbesondere ein rotes oder grünes konstantes Lichtsignal oder ein rotes oder grünes Blinklichtsignal. An diesem ersten Hinweissignal erkennt der Sportausübende, dass durch die von ihm an der Zielauslösereinrichtung bewirkte Zielbetätigung ein Zielbetätigungssignal ausgeben wurde und die Zeitmessung gestoppt wurde. Weist das erfindungsgemäße Zeiterfassungssystem eine zweite Startauslösereinrichtung und eine zweite Zielauslösereinrichtung zur Ausgabe eines zweiten Zielbetätigungssignals auf, also wird das erfindungsgemäße Zeiterfassungssystem im Rahmen eines Wettkampfs (je zwei Sportausübende laufen gegeneinander in einem Race) verwendet, so wird vorzugsweise ein Hinweissignal a) in Form eines grünen konstanten Lichtsignals oder eines grünen Blinklichtsignal an der weiteren Ausgabeeinrichtung der ersten Zielauslösereinrichtung ausgegeben und ein Hinweissignal a) in Form eines roten konstanten Lichtsignals oder eines roten Blinklichtsignal an der weiteren Ausgabeeinrichtung der zweiten Zielauslösereinrichtung ausgegeben, wenn das erste Zielbetätigungssignal zeitlich vor dem zweiten Zielbetätigungssignal erfolgt, und vorzugsweise ein Hinweissignal a) in Form eines grünen konstanten Lichtsignals oder eines grünen Blinklichtsignal an der weiteren Ausgabeeinrichtung der zweiten Zielauslösereinrichtung ausgegeben und ein Hinweissignal a) in Form eines roten konstanten Lichtsignals oder eines roten Blinklichtsignal an der weiteren Ausgabeeinrichtung der ersten Zielauslösereinrichtung ausgegeben, wenn das zweite Zielbetätigungssignal zeitlich vor dem ersten Zielbetätigungssignal erfolgt. Das zweite Hinweissignal b) ist vorzugsweise ein rotes Lichtsignal, insbesondere ein rotes Blinklichtsignal, welches einen Fehlstart während des Startvorgangs signalisiert, wenn während der zweiten Zeitphase der Status "Startbetätigung" gemessen wird.

In einer bevorzugten Ausführungsform des erfindungsgemäßen Zeiterfassungssystems ist das Zeiterfassungssystem ferner dazu eingerichtet, ein Startsignal und gegebenenfalls ein oder mehrere dem Startsignal vorangehende Signale zu erzeugen und dieses für den Sportausübenden wahrnehmbar, insbesondere akustisch, auszugeben. Vorzugsweise ist das Zeiterfassungssystem dazu eingerichtet ist, das Startsignal am Ende der zweiten Zeitphase zu erzeugen, insbesondere 0,100 Sekunden vor dem Ende der zweiten Zeitphase, vorzugsweise in Form eines hohen Pieptons (Dauer: 0,100 Sekunden). Vorteilhafterweise, insbesondere bei Anwendung im Klettersport, vorzugsweise Speedklettersport, ist das Zeiterfassungssystem dazu eingerichtet, ein erstes dem Startsignal vorangehendes Signal eine Sekunde nach Auslösen des Zeiterfassungssystems, vorzugsweise in Form eines ersten tiefen Pieptons (Dauer: 0,2 Sekunden), ein zweites dem Startsignal vorangehendes Signal zwei Sekunden nach Auslösen des Zeiterfassungssystems, vorzugsweise in Form eines zweiten tiefen Pieptons (Dauer: 0,2 Sekunden) zu erzeugen.

In einer weiteren bevorzugten Ausführungsform des erfindungsgemäßen Zeiterfassungssystems ist die Signalverarbeitungseinrichtung vorzugsweise dazu eingerichtet ist, die Zeit des Sportausübenden als den Zeitabstand zwischen dem Startsignal und dem Zielbetätigungssignal zu erfassen.

Ferner umfasst das erfindungsgemäße Zeiterfassungssystem in einer weiteren bevorzugten Ausführungsform eine Datenverarbeitungseinrichtung, insbesondere einen programmierbaren Mikrocontroller oder einen PC, vorzugsweise einen PC des Typs Rasperry Pi, erhältlich über https://www.raspberrypi.org, wobei die Datenverarbeitungseinrichtung mit der Signalverarbeitungseinrichtung verbunden ist, um elektrische Signale, insbesondere Daten, mit der Signalverarbeitungseinrichtung, die insbesondere einen Mikrocontroller für eine Präzisionszeitmessung umfasst, auszutauschen. Vorzugsweise ist die Datenverarbeitungseinrichtung dazu eingerichtet, die Information über den Zeitpunkt eines Startsignals an die Signalverarbeitungseinrichtung zu übertragen und vorzugsweise ist die Signalverarbeitungseinrichtung dazu eingerichtet, das Startsignal als Startzeitpunkt der Zeiterfassung zu verwenden, das von der Zielauslösereinrichtung erfasste Zielbetätigungssignal zur Bestimmung des Zielzeitpunkts zu verwenden, und insbesondere eine Zeitdifferenz aus dem Zielzeitpunkt (Zielbetätigungssignal) und dem Startzeitpunkt (Startsignal) zu ermitteln, oder insbesondere den Startzeitpunkt (Startsignal) und/oder den Zielzeitpunkt (Zielbetätigungssignal) an die Datenverarbeitungseinrichtung zu übertragen.

Gemäß der vorliegenden Erfindung sind die Datenverarbeitungseinrichtung und/oder die Signalverarbeitungseinrichtung vorzugsweise in einem Gehäuse angeordnet. Vorteilhafterweise ist die Startauslösereinrichtung durch ein elektrisches Kabel mit der Signalverarbeitungseinrichtung verbunden und/oder zu dem Gehäuse geführt. Zweckmäßigerweise ist ferner die Zielauslösereinrichtung durch ein elektrisches Kabel mit der Signalverarbeitungseinrichtung verbunden und/oder zu dem Gehäuse geführt.

Zudem umfasst das erfindungsgemäße Zeiterfassungssystem in einer bevorzugten Ausführungsform ferner vorzugsweise wenigstens einen Bildschirm, besonders bevorzugt einen Plasmabildschirm, auf dem bei einer von diesem Zeiterfassungssystem durchgeführten Zeitmessung gemessenen Zeitdaten, die insbesondere eine Zeitdifferenz aus dem Startsignal und dem Zielbetätigungssignal enthalten, angezeigt werden.

Vorzugsweise umfasst das erfindungsgemäße Zeiterfassungssystem außerdem mindestens einen Lautsprecher, insbesondere eine Soundbox.

In einer bevorzugten Ausführungsform umfasst das erfindungsgemäße Zeiterfassungssystem des Weiteren eine Benutzerschnittstelleneinrichtung, die insbesondere außerhalb der Datenverarbeitungseinrichtung bzw. außerhalb des Gehäuses angeordnet ist, und die insbesondere Bestandteil eines externen PCs oder einer portablen Datenverarbeitungsvorrichtung, insbesondere eines Smartpads oder eines Smartphones sein kann, und die dazu eingerichtet ist, die Informationen über den Startvorgang des Sportdurchgangs, der insbesondere die erste bis dritte Zeitphase enthält, und Informationen über den Zielvorgang des Sportdurchgangs durch eine Benutzereingabe zu erfassen und insbesondere diese Informationen an die Datenverarbeitungseinrichtung zu übertragen, insbesondere in Form einer Übertragung von Daten, welche diese Informationen enthalten.

In einer weiteren bevorzugten Ausführungsform umfasst das erfindungsgemäße Zeiterfassungssystem einen - vorzugsweise nichtflüchtigen - Datenspeicher, vorzugsweise einen ROM, in dem die das Zeiterfassungssystem kennzeichnenden Systemidentifikationsdaten gespeichert sind, die das bei einem Sportwettkampf oder Trainingsdurchgang verwendete Zeiterfassungssystem individuell eindeutig kennzeichnen. Zudem ist das Zeiterfassungssystem vorzugsweise dazu eingerichtet, einen Datensatz an einen externen Computerserver oder in ein externes Computernetzwerk zu übertragen, insbesondere über das Internet, wobei dieser Datensatz, jeweils vorzugsweise, enthält:
diese System identifikationsdaten,
vorzugsweise die bei einer von diesem Zeiterfassungssystem durchgeführten Zeitmessung gemessenen Zeitdaten, die insbesondere eine Zeitdifferenz aus Startzeit/Startsignal und Zielzeit/Zielbetätigungssignal enthalten,
vorzugsweise den Sportausübenden eindeutig kennzeichnende Personenidentifikationsdaten, die diesen Zeitdaten zugeordnet sind,
vorzugsweise Wettkampftypidentifikationsdaten, welche die Art des Wettkampfs eindeutig kennzeichnen,
vorzugsweise weitere Daten, beispielsweise beinhaltend Informationen über das kalendarische Datum der Ermittlung der Zeitdaten oder der Übertragung des Datensatzes, Daten über die absolute Uhrzeit der Erhebung der Zeitdaten oder der Übertragung des Datensatzes, Ortsinformationsdaten über den Standort des Zeiterfassungssystems während der Erhebung der Zeitdaten, die z.B. mittels einer optionalen GPS-Einrichtung des Zeiterfassungssystems erfasst sein können, Personenidentifikationsdaten einer den Wettkampf betreuenden Person oder eines Verantwortlichen, etc.

In einer weiteren bevorzugten Ausführungsform der Erfindung umfasst das erfindungsgemäße Zeiterfassungssystem
eine zweite Startauslösereinrichtung, die von einem zweiten Sportausübenden mittels einer Startbetätigung auslösbar ist, um ein zweites Startbetätigungssignal auszugeben, wobei die zweite Startauslösereinrichtung so eingerichtet ist, dass zwischen dem Status "Startbetätigung" und dem Status "nicht Startbetätigung" unterschieden werden kann,
eine zweite Zielauslösereinrichtung, die vom zweiten Sportausübenden mittels einer Zielbetätigung auslösbar ist, um ein zweites Zielbetätigungssignal auszugeben,
wobei die elektronische Signalverarbeitungseinrichtung mit der zweiten Startauslösereinrichtung verbunden ist, um das zweite Startbetätigungssignal elektronisch zu erfassen, und mit der zweiten Zielauslösereinrichtung verbunden ist, um das zweite Zielbetätigungssignal elektronisch zu erfassen,
wobei das Zeiterfassungssystem, insbesondere die Signalverarbeitungseinrichtung, dazu eingerichtet ist, während jeder der ersten Zeitphasen, und vorzugsweise zusätzlich auch während jeder der zweiten und/oder dritten Zeitphasen, den Status der zweiten Startauslösereinrichtung zu messen,
wobei vorzugsweise die während jeder der ersten Zeitphasen, und vorzugsweise zusätzlich auch während jeder der zweiten und/oder dritten Zeitphasen, erfolgende Messung des Status der zweiten Startauslösereinrichtung mittels mindestens eines Sensors einer Sensoreinrichtung der Startauslösereinrichtung oder mittels mindestens eines Sensors einer Sensoreinrichtung des Zeiterfassungssystems erfolgt,
wobei vorzugsweise das Zeiterfassungssystem eine zweite Ausgabeeinrichtung aufweist und dazu eingerichtet ist, während jeder der ersten Zeitphasen, insbesondere zusätzlich auch während jeder der zweiten und/oder dritten Zeitphasen, den Status der zweiten Startauslösereinrichtung zu messen und in Abhängigkeit von dieser Messung mittels der zweiten Ausgabeeinrichtung ein von dem zweiten Sportausübenden wahrnehmbares Hinweissignal auszugeben,
wobei vorzugsweise die zweite Ausgabeeinrichtung ein Bestandteil der zweiten Startauslösereinrichtung ist,
wobei vorzugsweise die an der zweiten Zielauslösereinrichtung erfolgende Messung der Zielbetätigung des zweiten Sportausübenden mittels mindestens eines Sensors einer Sensoreinrichtung der zweiten Zielauslösereinrichtung gemessen wird.
wobei vorzugsweise das Zeiterfassungssystem wenigstens eine weitere zweite Ausgabeeinrichtung aufweist und dazu eingerichtet ist, an der zweiten Zielauslösereinrichtung eine zweite Zielbetätigung des zweiten Sportausübenden zu messen und in Abhängigkeit von dieser Messung mittels der weiteren zweiten Ausgabeeinrichtung ein vom zweiten Sportausübenden wahrnehmbares Hinweissignal auszugeben, und/oder
wobei vorzugsweise die zweite weitere Ausgabeeinrichtung ein Bestandteil der zweiten Zielauslösereinrichtung ist.

Im Übrigen gilt für jede zweite oder weitere Startauslösereinrichtung und jede zweite oder weitere Zielauslösereinrichtung das oben Gesagte entsprechend.

In einer bevorzugten Ausführungsform des erfindungsgemäßen Zeiterfassungssystems umfasst die Startauslösereinrichtung eine Basis, auf der eine vom Sportausübenden betätigbare Platte vertikal beweglich bzw. in Richtung senkrecht zur Plattenebene beweglich angeordnet ist. Vorzugsweise ist die vom Sportausübenden betätigbare Platte zumindest teilweise transparent, besonders bevorzugt vollständig transparent. Zweckmäßigerweise ist die Platte eine Acrylglasplatte.

Vorzugsweise ist die Basis eine Basis aus Kunststoff, mehr bevorzugt besteht die Basis aus einer HPL Platte. Zweckmäßigerweise weist die Basis Aussparungen, vorzugsweise zur Aufnahme der Sensoreinrichtung und der Ausgabeeinrichtung auf. Zudem weist die Basis vorteilhafterweise Aussparungen für wenigstens ein elektrisches Kabel auf, insbesondere ein elektrisches Kabel durch das die Startauslösereinrichtung mit der Signalverarbeitungseinrichtung verbunden und/oder zu dem Gehäuse geführt ist. Vorzugsweise weist die Basis an der Unterseite Standfüße, insbesondere Gummifüße oder Gummipuffer und/oder eine Moosgummiauflage auf. Zweckmäßigerweise ist die Startauslösereinrichtung feuchtigkeitsabgeschirmt, so dass sie dauerhaft im Außenbereich betrieben werden kann.

Ferner ist es bevorzugt, dass die Startauslösereinrichtung eine Größe von etwa 30 cm x 27 cm x 3 cm (Breite x Tiefe x Höhe) aufweist.

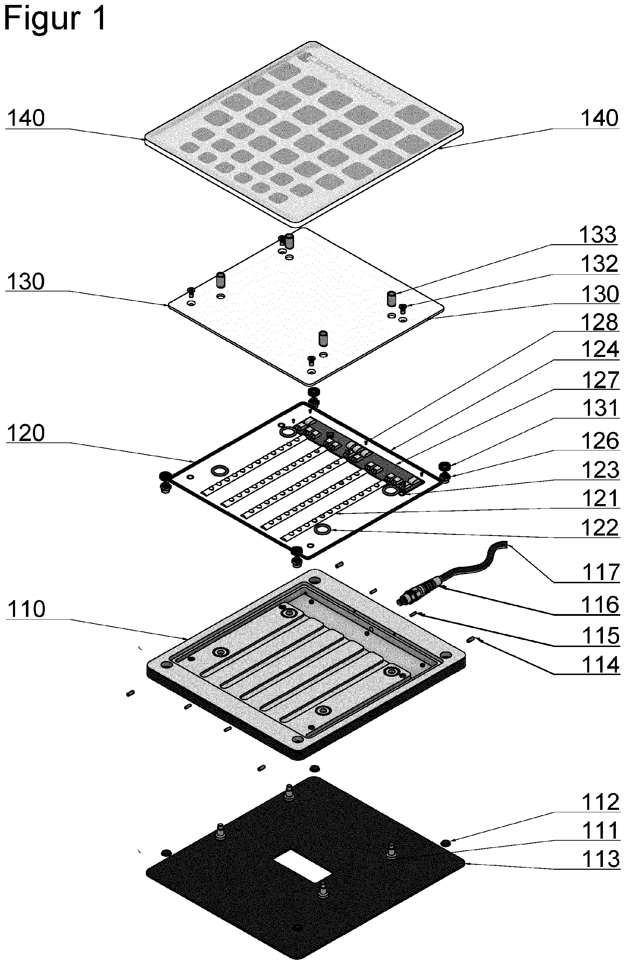

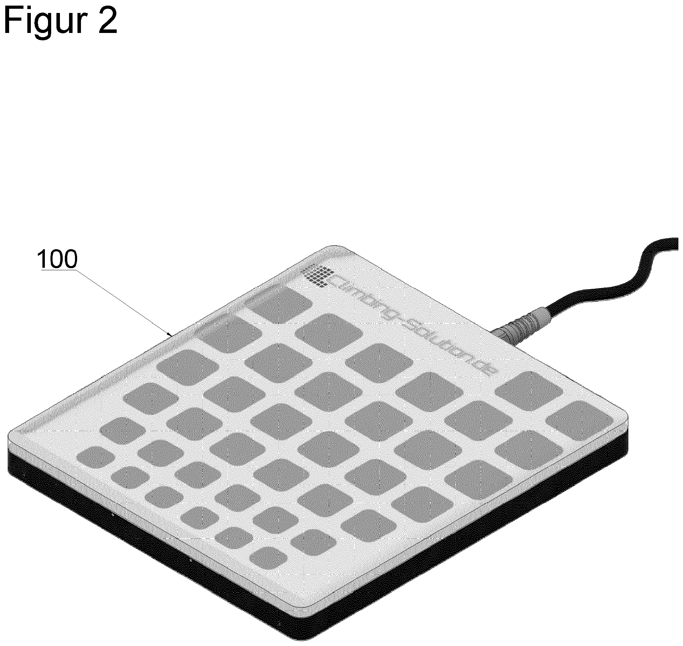

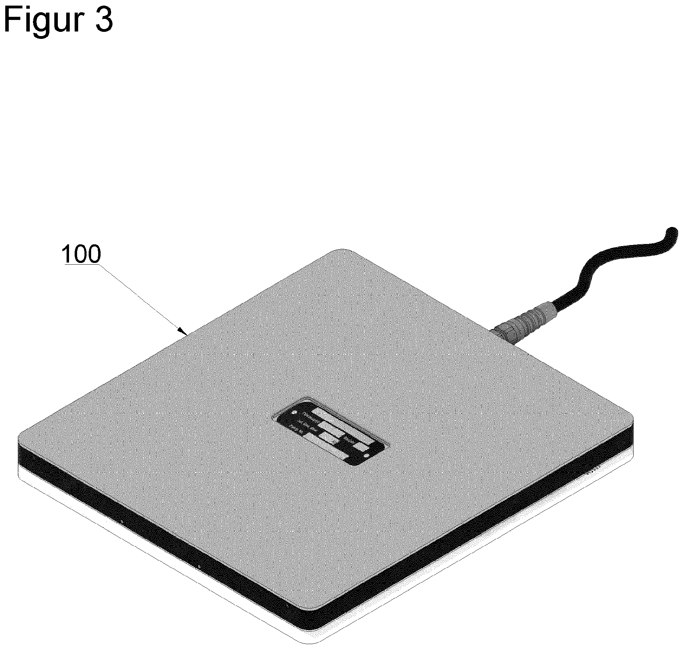

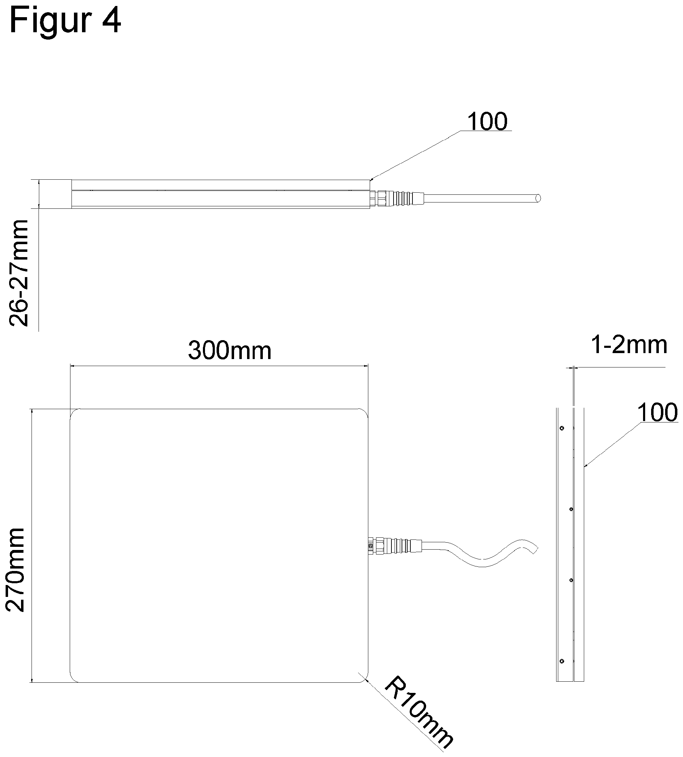

Eine beispielhafte erfindungsgemäße Startauslösereinrichtung ist in den Figuren 1 bis 4 gezeigt.

Figur 1 zeigt den schematischen Aufbau einer beispielhaften erfindungsgemäßen Startauslösereinrichtung (100) gemäß einer bevorzugten Ausführungsform der vorliegenden Erfindung, wobei die Startauslösereinrichtung (100) vorzugsweise die folgenden Bestandteile umfasst:
eine Basis (110), vorzugsweise aus einer HPL Platte, vorzugsweise undurchsichtig schwarz,
Schrauben (111), vorzugsweise Flanschschrauben, M6 x 7 mm, Zylinder D = 8 x 10, Innensechskant, Bund 4 mm, insbesondere aus Edelstahl, gebürstet,
Gummistopfen (112), vorzugsweise mit einem Durchmesser von 16 mm, wie beispielsweise erhältlich von Misumi Art, Artikelnummer C30-SG-16A-EP_UL, insbesondere aus Gummi, schwarz, und/oder eine Moosgummischicht (113), vorzugsweise 2 mm dick,
Schrauben (114), vorzugsweise Gewindestifte, DIN 913, M4 x 10 mm, wie beispielsweise erhältlich von WÜRTH, Artikelnummer 02614 10, insbesondere aus Edelstahl, gebürstet,
eine Klemmung (115),
eine Kabelanschlusseinrichtung (116), vorzugsweise eine Kabelverschraubung, wie beispielsweise erhältlich von SKINTOP, wie SKINTOP BS PG 7, Artikelnummer LAPP53015800, insbesondere aus Kunststoff, schwarz,
ein Kabel (117), vorzugsweise ein LAPP Kabel, 7-polig, mit einem Durchmesser von 7,7 mm und einer Länge von 15 Metern, insbesondere schwarz,
eine Zwischenplatte (120), vorzugsweise aus Acrylglas, durchsichtig,
LED-Lichtbänder (121), vorzugsweise RGB LED-Lichtbänder, ca. 170 mm lang x 10 mm breit, vorzugsweise mit 12 RGB LEDs pro Lichtband, wie beispielsweise erhältlich von LED-TECH.de,
Dichtungen (122), vorzugsweise O-Ring-Dichtungen, D = 16-20 mm x 3 mm, insbesondere aus Gummi, natur,
Dichtungen (123), vorzugsweise O-Ring-Dichtungen, D = 8 mm x 1 mm, insbesondere aus Gummi, natur,
ein Dichtband (124), vorzugsweise ein EPMD-Dichtband, D = 3 mm, Länge vorzugsweise 980 mm, insbesondere aus Gummi, schwarz,
Dichtungen (125), vorzugsweise O-Ring-Dichtungen, D = 13 mm x 9 mm x 2 mm, insbesondere aus Gummi, natur,
Mikroschalter (126), vorzugsweise Mikrotaster, wie beispielsweise erhältlich von TRUComponents, Artikelnummer 1564809, oder MISUMI, Aktikel MSNWF-S, insbesondere aus Edelstahl, gebürstet,
Platine (127), vorzugsweise eine Platine FR4, Abmessungen: 200 mm x 35 mm,
Schrauben (128), vorzugsweise Schrauben SNZ, M2 x 3 mm, zur Befestigung der Platine (127), insbesondere aus Stahl,
Abdeckplatte (130), vorzugsweise aus Acrylglas, insbesondere farblos mit 92 % Lichtdurchlässigkeit,
Gummipuffer (131), vorzugsweise Gummipuffer, D = 8 mm x 1 mm, selbstklebend, insbesondere aus Gummi, Silikon,
Schrauben (132), vorzugsweise Senkschrauben mit Innensechsrund, M5 x 10 mm, wie beispielsweise erhältlich von WÜRTH Artikelnummer 40245 10, insbesondere aus Edelstahl, gebürstet,
Abstandhalter (133), vorzugsweise Metallfedern, insbesondere aus Edelstahl, gebürstet, und
eine Platte (140), vorzugsweise aus Acrylglas, insbesondere farblos mit 92 % Lichtdurchlässigkeit.

Figur 2 zeigt eine schematische Darstellung einer beispielhaften erfindungsgemäßen Startauslösereinrichtung (100) gemäß einer bevorzugten Ausführungsform der vorliegenden Erfindung (Draufsicht, Vorderansicht, Seitenansicht).

Figur 3 zeigt eine schematische Darstellung einer beispielhaften erfindungsgemäßen Startauslösereinrichtung (100) gemäß einer bevorzugten Ausführungsform der vorliegenden Erfindung (Ansicht von unten).

Figur 4 zeigt schematische Darstellungen einer beispielhaften erfindungsgemäßen Startauslösereinrichtung (100) gemäß einer bevorzugten Ausführungsform der vorliegenden Erfindung von oben (Draufsicht) und von der Seite (Seite rechts, Vorderseite).

In einer bevorzugten Ausführungsform des erfindungsgemäßen Zeiterfassungssystems umfasst die Zielauslösereinrichtung eine Basis, auf der eine vom Sportausübenden betätigbare Platte angeordnet ist. Vorzugsweise ist die vom Sportausübenden betätigbare Platte eine Metallverbundplatte, insbesondere eine Kunststoff-Aluminium-Verbundplatte, besonders bevorzugt eine Kunststoff-Aluminium-Verbundplatte mit folgendem Schichtaufbau von oben nach unten: Kunststoff, Aluminium, Kunststoff, Aluminium, Kunststoff. Bei Verwendung dieser Platte ist es bevorzugt, dass die Sensoreinrichtung der Zielauslösereinrichtung mit wenigstens einem Bereich der ersten, d.h. der oben gelegenen Aluminiumschicht, beispielsweise mittels eines Kabels, insbesondere eines elektrischen Kabels, verbunden ist.

Vorzugsweise ist die Basis eine Basis, die zumindest teilweise transparent, besonders bevorzugt vollständig transparent ist. Zweckmäßigerweise ist die Basis eine Acrylglasplatte, vorzugsweise eine satinierte Acrylglasplatte in der Ausführung Frost. Zweckmäßigerweise weist die Basis Aussparungen, vorzugsweise zur Aufnahme der Sensoreinrichtung und der Ausgabeeinrichtung auf. Zudem weist die Basis vorteilhafterweise Aussparungen für wenigstens ein elektrisches Kabel auf, insbesondere ein elektrisches Kabel durch das die Zielauslösereinrichtung mit der Signalverarbeitungseinrichtung verbunden und/oder zu dem Gehäuse geführt ist. Vorzugsweise weist die Basis an der Unterseite Füße, insbesondere Gummifüße oder Gummipuffer oder eine dünne Gummibeschichtung, wie eine Moosgummischicht auf. Zweckmäßigerweise ist die Zielauslösereinrichtung feuchtigkeitsabgeschirmt, so dass sie dauerhaft im Außenbereich betrieben werden kann. Ferner ist die Zielauslösereinrichtung vorzugsweise mit einer Wand, wie beispielsweise einer Kletterwand, verschraubbar.

Ferner ist es bevorzugt, dass die Basis der Zielauslösereinrichtung eine Größe von etwa 30 cm x 27 cm x 1,5 cm (Breite x Tiefe x Höhe) aufweist. Die vom Sportausübenden betätigbare Platte weist vorzugsweise eine Größe von etwa 25 cm x 25 cm x 0,3 cm (Breite x Tiefe x Höhe) auf.

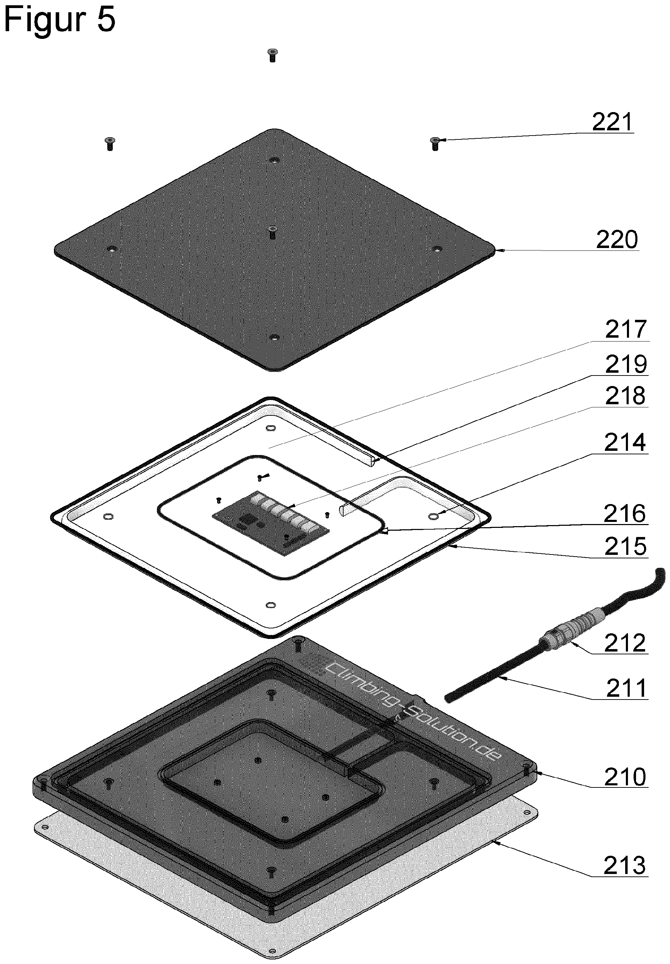

Eine beispielhafte erfindungsgemäße Zielauslösereinrichtung ist in den Figuren 5 bis 8 gezeigt.

Figur 5 zeigt den schematischen Aufbau einer beispielhaften erfindungsgemäßen Zielauslösereinrichtung (200) gemäß einer bevorzugten Ausführungsform der vorliegenden Erfindung, wobei die Zielauslösereinrichtung (200) vorzugsweise die folgenden Bestandteile umfasst:
eine Basis (210), vorzugsweise aus Acrylglas, insbesondere aus satiniertem Acrylglas, in der Ausführung Frost, oder einem Acrylglas mit 92 % Lichtdurchlässigkeit, vorzugsweise farblos,
ein Kabel (211), vorzugsweise ein LAPP Kabel, 7-polig, mit einem Durchmesser von 7,7 mm und einer Länge von 25 Metern, insbesondere schwarz,
eine Kabelanschlusseinrichtung (212), vorzugsweise eine Kabelverschraubung, wie beispielsweise erhältlich von SKINTOP, wie SKINTOP BS PG 7, Artikelnummer LAPP53015800, insbesondere aus Kunststoff, schwarz,
eine Gummibeschichtung (213), vorzugsweise eine Moosgummibeschichtung,
Dichtungen (214), vorzugsweise O-Ring-Dichtungen, D = 8 mm x 1 mm, insbesondere aus Gummi, schwarz,
ein Dichtband (215), vorzugsweise ein EPMD-Dichtband, D = 3 mm, Länge vorzugsweise 976 mm, insbesondere aus Gummi, schwarz,
ein Dichtband (216), vorzugsweise ein EPMD-Dichtband, D = 3 mm, Länge vorzugsweise 504,8 mm insbesondere aus Gummi, schwarz,
Schrauben (217), vorzugsweise Schrauben SNZ, M2 x 3mm, zur Befestigung der Platine (218), insbesondere aus Stahl,
eine Platine mit kapazitivem Sensor (218), vorzugsweise eine Platine FR4 mit kapazitivem Sensor, Abmessungen: 80 mm x 60 mm x 1,8 mm,
ein LED-Lichtband (219), vorzugsweise ein RGB LED-Lichtband, ca. 950 mm lang x 10 mm breit, wie beispielsweise erhältlich von LED-TECH.de,
eine Platte (220), vorzugsweise eine Kunststoff-Aluminium-Verbundplatte, insbesondere rot kunststofflackiert, und
Schrauben (221), vorzugsweise Senkkopfschrauben Innensechskant, M4 x 8 mm, A2 rostfrei, insbesondere aus Edelstahl, gebürstet.

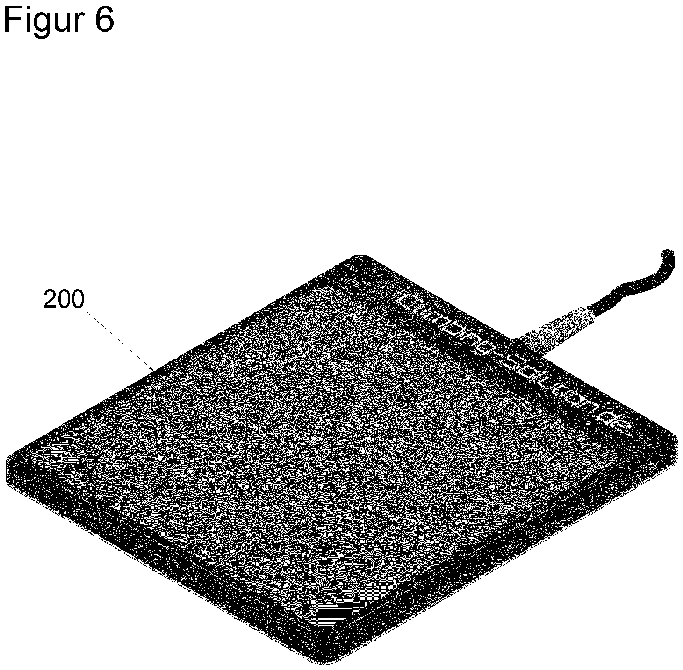

Figur 6 zeigt eine schematische Darstellung einer beispielhaften erfindungsgemäßen Zielauslösereinrichtung (200) gemäß einer bevorzugten Ausführungsform der vorliegenden Erfindung (Draufsicht, Vorderansicht, Seitenansicht).

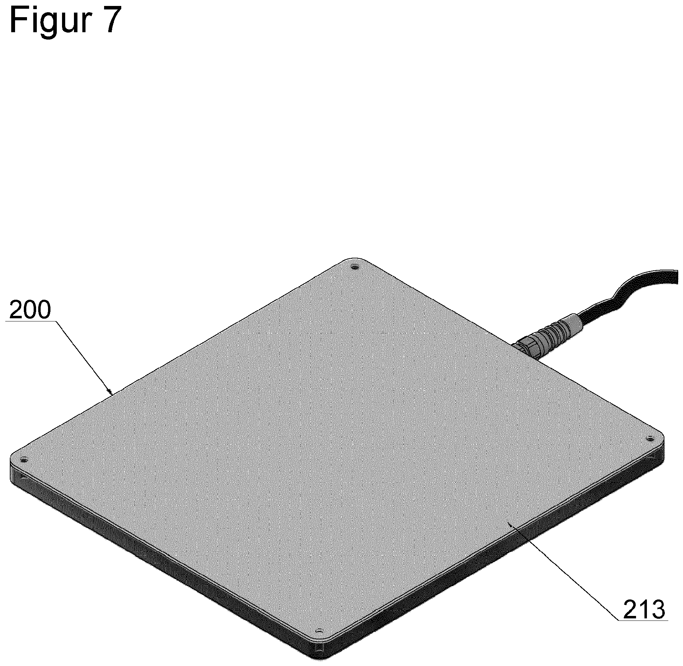

Figur 7 zeigt eine schematische Darstellung einer beispielhaften erfindungsgemäßen Zielauslösereinrichtung (200) gemäß einer bevorzugten Ausführungsform der vorliegenden Erfindung mit einer Gummibeschichtung (213) (Ansicht von unten).

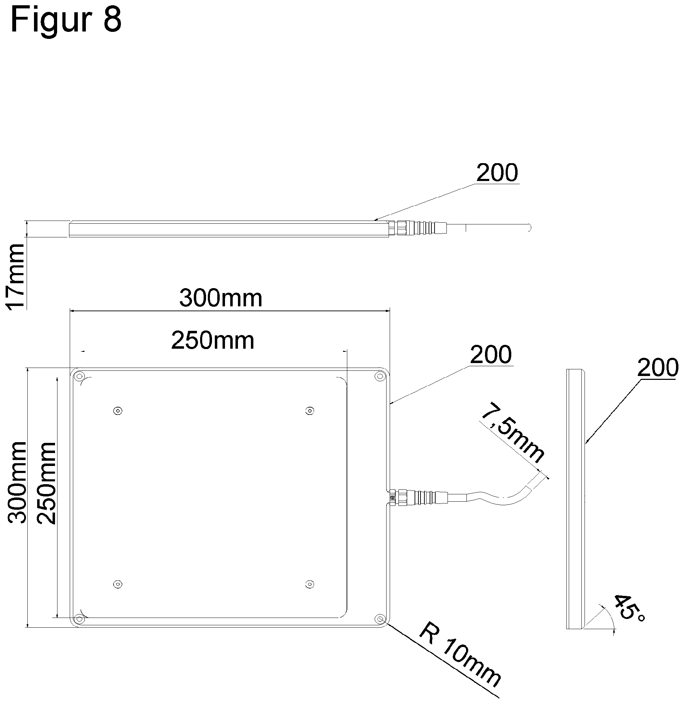

Figur 8 zeigt schematische Darstellungen einer beispielhaften erfindungsgemäßen Zielauslösereinrichtung (200) gemäß einer bevorzugten Ausführungsform der vorliegenden Erfindung von oben (Draufsicht) und von der Seite (Seite rechts, Vorderseite).

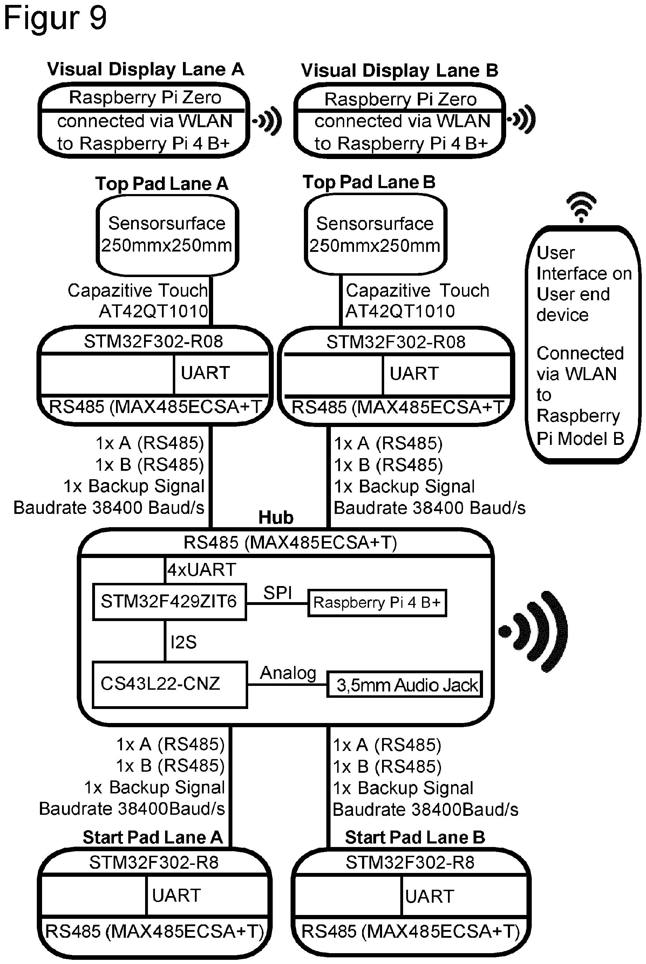

Ein beispielhaftes erfindungsgemäßes Zeiterfassungssystem ist in Figur 9 gezeigt.

Figur 9 zeigt eine schematische Darstellung eines erfindungsgemäßen Zeiterfassungssystems, das einen Hub aufweist, der als zeitmessende elektronische Signalverarbeitungseinrichtung des Zeiterfassungssystems eine Platine "STM32F429ZIT6" aufweist, die über eine Schnittstelle RS485 mit einer Startauslösereinrichtung "Start Pad Lane A" und einer Startauslösereinrichtung "Startpad Lane B" verbunden ist, um ein Startbetätigungssignal elektronisch zu erfassen, und die über die Schnittstelle RS485 mit der Zielauslösereinrichtung "Top Pad Lane A" und der Zielauslösereinrichtung "Top Pad Lane B" verbunden ist, um ein Zielbetätigungssignal elektronisch zu erfassen. Die zeitmessende Signalverarbeitungseinrichtung "STM32F429ZIT6" ist dazu eingerichtet bzw. programmiert, um unter Verwendung zumindest des Startbetätigungssignals und/oder des Zielbetätigungssignals eine Zeitdifferenz zu messen, vorzugsweise auch um zu ermitteln, ob das Startbetätigungssignal in der zweiten Zeitphase liegt - was als Fehlstart zu werten wäre. Das Zeiterfassungssystem bzw. die Signalverarbeitungseinrichtung "STM32F429ZIT6" ist dazu eingerichtet, während der ersten Zeitphase den Status der Startauslösereinrichtung zu messen, insbesondere während der ersten Zeitphase, vorzugsweise zusätzlich auch während der zweiten und/oder dritten Zeitphase, a) den Status der Startauslösereinrichtung zu messen, und b) in Abhängigkeit von dieser Messung mittels der Ausgabeeinrichtung ein von dem Sportausübenden wahrnehmbares Hinweissignal auszugeben, insbesondere indem die Signalverarbeitungseinrichtung "STM32F429ZIT6" die Datenverarbeitungseinrichtung "Rasperry PI 4 B+" veranlasst dieses Hinweissignal auszugeben, insbesondere akustisch über Lautsprecher/Soundbox und/oder über die Anzeige Lane A oder die Anzeige Lane B.

Ferner beschreibt die vorliegende Anmeldung ein weiteres Zeiterfassungssystem zur Durchführung einer Zeitmessung im Sport, aufweisend
eine Startauslösereinrichtung, die vom Sportausübenden mittels einer Startbetätigung auslösbar ist, um ein Startbetätigungssignal auszugeben,
eine Zielauslösereinrichtung, die vom Sportausübenden mittels einer Zielbetätigung auslösbar ist, um ein Zielbetätigungssignal auszugeben,
eine elektronische Signalverarbeitungseinrichtung, die mit der Startauslösereinrichtung verbunden ist, um das Startbetätigungssignal elektronisch zu erfassen, und die mit der Zielauslösereinrichtung verbunden ist, um das Zielbetätigungssignal elektronisch zu erfassen,
dadurch gekennzeichnet, dass
das Zeiterfassungssystem eine Sensoreinrichtung und eine Ausgabeeinrichtung aufweist, die Bestandteile der Startauslösereinrichtung und/oder der Zielauslösereinrichtung sind, und dazu eingerichtet sind, in Abhängigkeit von einer Messung der Sensoreinrichtung mittels der Ausgabeeinrichtung ein von dem Sportausübenden wahrnehmbares Hinweissignal auszugeben.

Die bislang im Stand der Technik beschriebenen Zeitmesssysteme sind lediglich darauf beschränkt, den Start und die Zielankunft präzise zu beobachten und insbesondere Fehlstarts und die korrekte Zielankunft zu detektieren. Ansonsten stellen die Anlagen jedoch keine weitergehenden Informationen für den Sportausübenden bereit. Mit Hilfe der oben beschriebenen Zeitmessanlage ist es jedoch erstmals möglich dem Sportausübenden mittels eines wahrnehmbaren Hinweissignals Informationen über eine Eigenschaft und/oder Betätigung des Sportausübenden oder eine Eigenschaft oder einen Umwelteinfluss bereitzustellen. Umwelteinflüsse können beispielsweise sein: Wetter/Klimadaten, insbesondere Temperatur, Luftfeuchte, Luftdruck, Windstärke, Windrichtung, Umgebungslautstärke, Gaspartialdruck der Luft (Sauerstoff, CO₂, etc.).

Ein derartig gestaltetes Zeiterfassungssystem bietet dem Sportausübenden weitergehende Informationen, die er intuitiv und komfortabel erfassen kann, da er beim Start ohnehin auf die Positionierung an der Startauslösereinrichtung konzentriert ist und bei der Zielankunft naturgemäß auf die Zielauslösereinrichtung fokussiert ist. Diese Informationen betreffen insbesondere die Startpositionierung des Sportausübenden an der Startauslösereinrichtung und insbesondere die korrekte Betätigung der Zielauslösereinrichtung. Besonders einfach wahrzunehmen ist dabei insbesondere eine optische Anzeige, die vom Sportausübenden, ohne die Konzentration zu stören, visuell wahrnehmbar ist.

In einer bevorzugten Ausführungsform ist die Sensoreinrichtung des Zeiterfassungssystems dazu eingerichtet, eine Eigenschaft und/oder Betätigung des Sportausübenden oder eine Eigenschaft oder einen Umwelteinfluss zu messen. Insbesondere ist die Sensoreinrichtung der Startauslösereinrichtung dazu geeignet, eine Startbetätigung oder nicht Startbetätigung des Sportausübenden zu messen. Vorzugsweise ist die Sensoreinrichtung der Zielauslösereinrichtung dazu geeignet, eine Zielbetätigung des Sportausübenden zu messen.

In einer weiteren bevorzugten Ausführungsform ist das Zeiterfassungssystem dazu eingerichtet, ein Startsignal zu erzeugen und dieses für den Sportausübenden wahrnehmbar, insbesondere akustisch, auszugeben.

In einer weiteren bevorzugten Ausführungsform ist das Zeiterfassungssystem dazu eingerichtet, die Zeit des Sportausübenden als den Zeitabstand zwischen dem Startsignal und dem Zielbetätigungssignal zu erfassen.

Besonders bevorzugt ist die Startauslösereinrichtung, die Zielauslösereinrichtung, die elektronische Signalverarbeitungseinrichtung, die Sensoreinrichtung und die Ausgabeeinrichtung eine Startauslösereinrichtung, eine Zielauslösereinrichtung, eine elektronische Signalverarbeitungseinrichtung, eine Sensoreinrichtung und eine Ausgabeeinrichtung wie oben bereits für das erfindungsgemäße Zeiterfassungssystem beschrieben. Im Übrigen gilt das für das oben beschriebene erfindungsgemäße Zeiterfassungssystem Gesagte entsprechend.

Zudem beschreibt die vorliegende Anmeldung ein weiteres Zeiterfassungssystem zur Durchführung einer Zeitmessung im Sport, aufweisend
eine Startauslösereinrichtung, die vom Sportausübenden mittels einer Startbetätigung auslösbar ist, um ein Startbetätigungssignal auszugeben,
eine Zielauslösereinrichtung, die vom Sportausübenden mittels einer Zielbetätigung auslösbar ist, um ein Zielbetätigungssignal auszugeben,
eine elektronische Signalverarbeitungseinrichtung, die mit der Startauslösereinrichtung verbunden ist, um das Startbetätigungssignal elektronisch zu erfassen, und die mit der Zielauslösereinrichtung verbunden ist, um das Zielbetätigungssignal elektronisch zu erfassen,
dadurch gekennzeichnet, dass
die Zielauslösereinrichtung mindestens einen kapazitiven Sensor aufweist, der vom Sportausübenden mittels einer Zielbetätigung auslösbar ist, um das die Zielankunft des Sportausübenden kennzeichnende Zielbetätigungssignal auszugeben.

Bei den bislang bekannten Zeitmesssystemen tritt für den Sportausübenden häufig das Problem auf, dass er im Rahmen eines Sportdurchgangs keine gültige Zeit erhielt, obwohl er die Zielauslösereinrichtung am Ende seines Laufs berührt hatte. In diesen Fällen wurde die Zeitmessung aufgrund der Konstruktionseigenheiten der bestehenden Zeitmesssysteme nicht gestoppt. Insbesondere führte ein zu schwach angeschlagenes Toppad häufig dazu, dass die Zeitmessung nicht gestoppt wurde. Gerade für Kinder und jüngere Jugendliche war das Auslösen der Zielauslösereinrichtung aufgrund des benötigten Kraftaufwands nicht immer leicht und führte daher häufig zu einem verfrühten Ausscheiden aus dem Wettkampf. Aber auch bei älteren Jugendlichen und Erwachsenen stoppte die Zeitmessung der bislang bekannten Zeitmesssysteme nicht immer korrekt.

Die Zielauslösereinrichtung des oben beschriebenen Zeiterfassungssystems ist erstmals in der Lage geringste Zielbetätigungen zu messen und daraufhin verläßlich ein Zielbetätigungssignal auszugeben. Ferner muß die Zielauslösereinrichtung des beschriebenen Zeiterfassungssystems nicht mehr zentral bzw. mittig durch den Sportausübenden berührt werden, um ein Zielbetätigungssignal auszugeben, wie es bei den bislang bekannten Zeitmesssystemen der Fall war. Jegliche Zielbetätigung auf der vom Sportausübenden betätigbaren Platte der Zielauslösereinrichtung - egal ob mittig oder im Randbereich - führt zuverlässig zur Ausgabe eines Zielbetätigungssignals. Somit kann mit dem oben beschriebenen Zeiterfassungssystem sichergestellt werden, dass die Sportausübenden durch Berührung der Zielauslösereinrichtung eine gültige Zeit erhalten. Ein vorzeitiges Ausscheiden von Sportausübenden trotz Zielbetätigung kann somit verläßlich vermieden werden.

In einer bevorzugten Ausführungsform ist das Zeiterfassungssystem dazu eingerichtet, ein Startsignal zu erzeugen und dieses für den Sportausübenden wahrnehmbar, insbesondere akustisch, auszugeben.

In einer weiteren bevorzugten Ausführungsform ist das Zeiterfassungssystem dazu eingerichtet, die Zeit des Sportausübenden als den Zeitabstand zwischen dem Startsignal und dem Zielbetätigungssignal zu erfassen.

Vorzugsweise ist die Startauslösereinrichtung, die Zielauslösereinrichtung, die elektronische Signalverarbeitungseinrichtung, die Sensoreinrichtung und die Ausgabeeinrichtung eine Startauslösereinrichtung, eine Zielauslösereinrichtung, eine elektronische Signalverarbeitungseinrichtung, eine Sensoreinrichtung und eine Ausgabeeinrichtung wie oben bereits für das erfindungsgemäße Zeiterfassungssystem beschrieben. Im Übrigen gilt das für das oben beschriebene erfindungsgemäße Zeiterfassungssystem Gesagte entsprechend.

## Patentansprüche

1. Zeiterfassungssystem zur Durchführung einer Zeitmessung im Sport, bei der der Sportausübende während einer ersten Zeitphase seine Startposition einnimmt, der Start während einer zweiten Zeitphase unzulässig ist und während einer dritten Zeitphase zulässig ist, wobei die zweite Zeitphase unmittelbar auf die erste Zeitphase folgt und die dritte Zeitphase unmittelbar auf die zweite Zeitphase folgt, aufweisend
eine Startauslösereinrichtung, die vom Sportausübenden mittels einer Startbetätigung auslösbar ist, um ein Startbetätigungssignal auszugeben, wobei die Startauslösereinrichtung so eingerichtet ist, dass zwischen dem Status "Startbetätigung" und dem Status "nicht Startbetätigung" unterschieden werden kann,
eine Zielauslösereinrichtung, die vom Sportausübenden mittels einer Zielbetätigung auslösbar ist, um ein Zielbetätigungssignal auszugeben,
eine elektronische Signalverarbeitungseinrichtung, die mit der Startauslösereinrichtung verbunden ist, um das Startbetätigungssignal elektronisch zu erfassen, und die mit der Zielauslösereinrichtung verbunden ist, um das Zielbetätigungssignal elektronisch zu erfassen,
**dadurch gekennzeichnet, dass**
das Zeiterfassungssystem dazu eingerichtet ist, während der ersten Zeitphase den Status der Startauslösereinrichtung zu messen.

2. Zeiterfassungssystem gemäß Anspruch 1, **dadurch gekennzeichnet, dass** das Zeiterfassungssystem dazu eingerichtet ist, während jeder der ersten, zweiten und/oder dritten Zeitphase den Status der Startauslösereinrichtung zu messen.

3. Zeiterfassungssystem gemäß einem der vorhergehenden Ansprüche, **dadurch gekennzeichnet, dass** die während der ersten Zeitphase, insbesondere zusätzlich auch während der zweiten und/oder dritten Zeitphase, erfolgende Messung des Status der Startauslösereinrichtung mittels mindestens eines Sensors einer Sensoreinrichtung der Startauslösereinrichtung oder mittels mindestens eines Sensors einer Sensoreinrichtung des Zeiterfassungssystems erfolgt.

4. Zeiterfassungssystem gemäß Anspruch 3, **dadurch gekennzeichnet, dass** der mindestens eine Sensor ein Mikroschalter ist.

5. Zeiterfassungssystem gemäß einem der vorhergehenden Ansprüche, **dadurch gekennzeichnet, dass** das Zeiterfassungssystem eine Ausgabeeinrichtung aufweist und dazu eingerichtet ist, während der ersten Zeitphase, insbesondere zusätzlich auch während der zweiten und/oder dritten Zeitphase,
a) den Status der Startauslösereinrichtung zu messen, und
b) in Abhängigkeit von dieser Messung mittels der Ausgabeeinrichtung ein von dem Sportausübenden wahrnehmbares Hinweissignal auszugeben.

6. Zeiterfassungssystem gemäß Anspruch 5 und einem der vorhergehenden Ansprüche, **dadurch gekennzeichnet, dass** die Ausgabeeinrichtung ein Bestandteil der Startauslösereinrichtung ist.

7. Zeiterfassungssystem gemäß Anspruch 5 oder 6 und einem der vorhergehenden Ansprüche, **dadurch gekennzeichnet, dass** die Ausgabeeinrichtung mindestens eine Lichtquelle aufweist.

8. Zeiterfassungssystem gemäß Anspruch 5, 6 oder 7 und einem der vorhergehenden Ansprüche, **dadurch gekennzeichnet, dass** die Ausgabeeinrichtung dazu eingerichtet ist,
a) ein erstes Hinweissignal auszugeben, wenn während der ersten Zeitphase der Status "Startbetätigung" gemessen wird, und/oder
b) ein zweites Hinweissignal auszugeben, wenn während der ersten Zeitphase der Status "nicht Startbetätigung" gemessen wird, und/oder
c) ein viertes Hinweissignal auszugeben, wenn während der zweiten Zeitphase der Status "nicht Startbetätigung" gemessen wird, und/oder
d) ein drittes Hinweissignal auszugeben, wenn während der zweiten Zeitphase der Status "Startbetätigung" gemessen wird, und/oder
e) ein fünftes Hinweissignal auszugeben, welches insbesondere den Beginn der Zeitmessung signalisiert, und/oder
f) ein sechstes Hinweissignal auszugeben, wenn während der dritten Zeitphase der Status "Startbetätigung" gemessen wird,
wobei sich die Hinweissignale für den Sportausübenden vorzugsweise jeweils wahrnehmbar unterscheiden.

9. Zeiterfassungssystem gemäß einem der vorhergehenden Ansprüche, **dadurch gekennzeichnet, dass** die an der Zielauslösereinrichtung erfolgende Messung der Zielbetätigung des Sportausübenden mittels mindestens eines Sensors einer Sensoreinrichtung der Zielauslösereinrichtung erfolgt, wobei der mindestens eine Sensor vorzugsweise ein kapazitiver Sensor ist.

10. Zeiterfassungssystem gemäß einem der vorhergehenden Ansprüche, **dadurch gekennzeichnet, dass** das Zeiterfassungssystem eine weitere Ausgabeeinrichtung aufweist und dazu eingerichtet ist, an der Zielauslösereinrichtung
a) eine Zielbetätigung des Sportausübenden zu messen und
b) in Abhängigkeit von dieser Messung mittels der weiteren Ausgabeeinrichtung ein vom Sportausübenden wahrnehmbares Hinweissignal auszugeben,
wobei vorzugsweise die weitere Ausgabeeinrichtung ein Bestandteil der Zielauslösereinrichtung ist.

11. Zeiterfassungssystem gemäß Anspruch 10, **dadurch gekennzeichnet, dass** die weitere Ausgabeeinrichtung mindestens eine Lichtquelle aufweist.

12. Zeiterfassungssystem gemäß Anspruch 10 oder 11 und einem der vorhergehenden Ansprüche, **dadurch gekennzeichnet, dass** die weitere Ausgabeeinrichtung dazu eingerichtet ist,
a) ein erstes Hinweissignal auszugeben, wenn eine durch den Sportausübenden bewirkte Zielbetätigung gemessen wird, und/oder
b) ein zweites Hinweissignal auszugeben, wenn während der zweiten Zeitphase der Status "Startbetätigung" gemessen wird, welches einen Fehlstart signalisiert,
wobei sich die Hinweissignale für den Sportausübenden jeweils wahrnehmbar unterscheiden.

13. Zeiterfassungssystem nach einem der vorhergehenden Ansprüche, **dadurch gekennzeichnet dass**,
das Zeiterfassungssystem dazu eingerichtet ist, ein Startsignal zu erzeugen und dieses für den Sportausübenden wahrnehmbar, insbesondere akustisch, auszugeben,
die Signalverarbeitungseinrichtung vorzugsweise dazu eingerichtet ist, die Zeit des Sportausübenden als den Zeitabstand zwischen dem Startsignal und dem Zielbetätigungssignal zu erfassen.

14. Zeiterfassungssystem gemäß einem der vorhergehenden Ansprüche, welches aufweist:
eine Datenverarbeitungseinrichtung, wobei die Datenverarbeitungseinrichtung mit der Signalverarbeitungseinrichtung verbunden ist, um elektrische Signale mit der Signalverarbeitungseinrichtung auszutauschen,
vorzugsweise wenigstens einen Bildschirm, auf dem bei einer von diesem Zeiterfassungssystem durchgeführten Zeitmessung gemessenen Zeitdaten angezeigt werden, und
vorzugsweise wenigstens einen Lautsprecher.

15. Zeiterfassungssystem gemäß einem der vorhergehenden Ansprüche, aufweisend eine zweite Startauslösereinrichtung, die von einem zweiten Sportausübenden mittels einer Startbetätigung auslösbar ist, um ein zweites Startbetätigungssignal auszugeben, wobei die zweite Startauslösereinrichtung so eingerichtet ist, dass zwischen dem Status "Startbetätigung" und dem Status "nicht Startbetätigung" unterschieden werden kann,
eine zweite Zielauslösereinrichtung, die vom zweiten Sportausübenden mittels einer Zielbetätigung auslösbar ist, um ein zweites Zielbetätigungssignal auszugeben,
wobei die elektronische Signalverarbeitungseinrichtung mit der zweiten Startauslösereinrichtung verbunden ist, um das zweite Startbetätigungssignal elektronisch zu erfassen, und mit der zweiten Zielauslösereinrichtung verbunden ist, um das zweite Zielbetätigungssignal elektronisch zu erfassen,
wobei das Zeiterfassungssystem, insbesondere die Signalverarbeitungseinrichtung, dazu eingerichtet ist, während jeder der ersten Zeitphasen, und vorzugsweise zusätzlich auch während jeder der zweiten und/oder dritten Zeitphasen, den Status der zweiten Startauslösereinrichtung zu messen,
wobei vorzugsweise die während jeder der ersten Zeitphasen, und vorzugsweise zusätzlich auch während jeder der zweiten und/oder dritten Zeitphasen, erfolgende Messung des Status der zweiten Startauslösereinrichtung mittels mindestens eines Sensors einer Sensoreinrichtung der Startauslösereinrichtung oder mittels mindestens eines Sensors einer Sensoreinrichtung des Zeiterfassungssystems erfolgt,
wobei vorzugsweise das Zeiterfassungssystem eine zweite Ausgabeeinrichtung aufweist und dazu eingerichtet ist, während jeder der ersten Zeitphasen, insbesondere zusätzlich auch während jeder der zweiten und/oder dritten Zeitphasen, den Status der zweiten Startauslösereinrichtung zu messen und in Abhängigkeit von dieser Messung mittels der zweiten Ausgabeeinrichtung ein von dem zweiten Sportausübenden wahrnehmbares Hinweissignal auszugeben,
wobei vorzugsweise die zweite Ausgabeeinrichtung ein Bestandteil der zweiten Startauslösereinrichtung ist,
wobei vorzugsweise die an der zweiten Zielauslösereinrichtung erfolgende Messung der Zielbetätigung des zweiten Sportausübenden mittels mindestens eines Sensors einer Sensoreinrichtung der zweiten Zielauslösereinrichtung gemessen wird,
wobei vorzugsweise das Zeiterfassungssystem wenigstens eine weitere zweite Ausgabeeinrichtung aufweist und dazu eingerichtet ist, an der zweiten Zielauslösereinrichtung eine zweite Zielbetätigung des zweiten Sportausübenden zu messen und in Abhängigkeit von dieser Messung mittels der weiteren zweiten Ausgabeeinrichtung ein vom zweiten Sportausübenden wahrnehmbares Hinweissignal auszugeben, und/oder
wobei vorzugsweise die zweite weitere Ausgabeeinrichtung ein Bestandteil der zweiten Zielauslösereinrichtung ist.
